# EUROPEAN PATENT SPECIFICATION

(11) **EP 3 628 170 B1**
(45) Date of publication and mention of the grant of the patent: **15.05.2024**
(21) Application number: 19199976.2
(22) Date of filing: 26.09.2019
(51) Int. Cl.: A23L 2/02, A23L 2/74

(54) **PRODUCTION OF ORANGE JUICE**
HERSTELLUNG VON ORANGENSAFT
PRODUCTION DE JUS D'ORANGE

(30) Priority: 27.09.2018 EP 18197308
(43) Date of publication of application: 01.04.2020
(73) Proprietor: Tetra Laval Holdings & Finance S.A., 1009 Pully (CH)
(72) Inventor: Fu, Tianjiao, 222 35 Lund (SE); Lanzingh, Christer, 217 48 Malmö (SE); Larsen, Lars Boe, 8330 Bender (DK); Cremonesi, Mayra, 13190-000 São Paulo (BR); Iada, Roberto Tacao, 15-991 278 Mateo Sao Paulo (BR); Fonseca, Aluisio Ragazzi, 33327, Weston, FL (US)
(74) Representative: Tetra Pak - Patent Attorneys SE

(56) References cited:
- US-A- 5 403 604
- US-A1- 2008 081 096
- R P Bates ET AL: "Principles and practices of small- and medium scale fruit juice processing", , 1 January 2001 (2001-01-01), XP055554002, Retrieved from the Internet: URL:https://ucanr.edu/datastoreFiles/234-2 085.pdf [retrieved on 2019-02-08]

## Description

### TECHNICAL FIELD

Embodiments herein relate to a method and a system for producing orange juice.

### BACKGROUND

Production, starting from freshly squeezed orange juice (often referred to as raw orange juice), of an orange juice product that has a lower sugar content while at the same time preserving flavor and maximizing the shelf life of the orange juice product and minimizing the negative effects on juice quality due to pasteurization requires a number of processing steps. In prior art production methods and systems, membrane filtration technology and pasteurization have been used to remove sugar and to prolong shelf life.

However, prior art solutions are typically focused on a single part of the production process. No prior art solution has presented an orange juice product that has a relatively lower sugar content, a natural flavor that resembles that of freshly pressed orange juice, while at the same time having a long shelf life.

US2008081096A1 explains a juice processing system for reducing calories including multiple stages for filtering the juice to produce a clarified low-calorie juice having an acceptable flavor profile.

US5403604A explains a membrane separation process that results in (1) a nutritious high Brix/acid (B/A) ratio juice fraction and (2) a low calorie, low B/A ratio content juice fraction. The low-calorie juice fraction is sweetened with a high potency sweetener. The sugar separation process involves ultrafiltration, nanofiltration and optionally reverse osmosis techniques.

R P Bates et al: "Principles and practices of small- and medium scale fruit juice processing", XP055554002, explains aseptic processing and sterile filtration of juices.

### SUMMARY

In view of the above, an object of the present disclosure is to improve prior art techniques for producing orange juice. In particular, an object is to obtain a juice having a reduced sugar content while taste and quality still resembles that of freshly squeezed juice.

This object is achieved in a first aspect by a method for producing orange juice. The method comprises ultrafiltrating the raw orange juice by a ceramic type ultrafilter (107) having a membrane with a pore size of 19-21 nm and a channel size of 3,5-4,5 mm to produce an ultrafiltered permeate (UF permeate) and an ultrafiltered retentate (UF retentate). The UF permeate is nanofiltered by a spiral wound nanofilter (130) having a pore size resulting a molecular weight cut-off as 600-800 Dalton to produce a nanofiltered permeate (NF permeate) and a nanofiltered retentate (NF retentate). The UF retentate and the NF permeate are then mixed to produce orange juice having a sugar content in the interval 67% to 77% of the sugar content of the raw orange juice. The orange juice is pasteurized and thereafter aseptically filled in packets.

By ultrafiltrating the raw orange juice and thereby obtain a UF retentate and a UF permeate, followed by nanofiltering the UF permeate to obtain a NF retentate and a NF permeate, and creating the orange juice by mixing the UF retentate and the NF permeate followed by pasteurizing the mixture efficiently reduces the sugar content. Consuming orange juice having a reduced sugar content is often considered healthier than consuming orange juice that contains all its natural sugars. Moreover, the filtering used for obtaining the orange juice provides for preserving a high quality of the orange juice, especially in terms of flavor and color.

As will be exemplified in the detailed description below, the method has effects on, i.e. provides certain values for, different sugars, the enzyme pectin esterase (PEU) content, the lactic bacteria colony forming units (CFU) content, the vitamin C content, the pH value, the color of the juice as well as the essential oil content of the orange juice. The values obtained are all favorable in terms of providing a good quality and flavor of the orange juice, while at the same time offering a long shelf life.

In a second aspect there is provided a system for producing orange juice. The system comprises a ceramic type ultrafilter having a membrane with a pore size of 19-21 nm and a channel size of 3,5-4,5 mm arranged to ultrafilter the raw orange juice to produce a UF permeate and a UF retentate. A spiral wound nanofilter having a pore size resulting a molecular weight cut-off as 600-800 Dalton arranged is arranged to nanofilter the UF permeate to produce a NF permeate and a NF retentate. A mixing unit is arranged to mix the UF retentate and the NF permeate to produce orange juice having a sugar content in the interval 67% to 77% of the sugar content of the raw orange juice. A pasteurizer is arranged to pasteurize the orange juice, and an aseptic filling machine is arranged to aseptically fill packets with the pasteurized orange juice.

This second aspect provides effects and advantages corresponding to the effects and advantages as summarized above in connection with the first aspect. All features and variants described herein in connection with the method according to the first aspect may be used for the system according to the second aspect, and vice versa.

### BRIEF DESCRIPTION OF THE DRAWINGS

Embodiments of the invention will now be described, by way of example, with reference to the accompanying schematic drawings, in which:
figure 1 is a schematic illustration of a system for producing orange juice, and
figure 2 is a flowchart of a method for producing orange juice.

### DETAILED DESCRIPTION

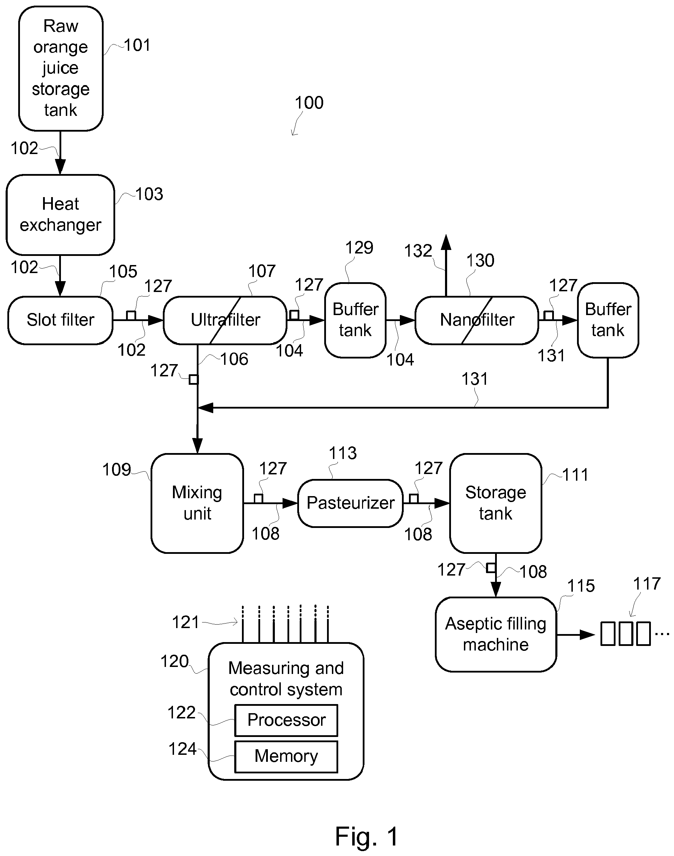

With reference to Fig. 1, an embodiment of a system 100 for producing sugar reduced orange juice 108 that retains much of the quality and flavor of freshly pressed orange juice 102 as summarized above will now be described. The system 100 is connected to a measuring and control system 120 that comprises processing and memory means 122, 124. The processing and memory means 122, 124 are configured with software instructions that obtain measurements via signal lines 121 from schematically illustrated sensors 127 in the system 100 and also control the system 100 to perform the processing as described herein. As the skilled person will realize, the sensors 127 are configured such that they provide measurement signals representative of any desirable parameter related to the production of orange juice 108, as will be discussed further in the following.

The system 100 comprises a storage tank 101 that holds raw orange juice 102 that has been obtained according to known techniques, e.g. by means of pressing freshly harvested oranges in an appropriately configured orange press.

The raw orange juice 102 is passed through a heat exchanger 103 to obtain a suitable temperature for the subsequent filtration steps. It has been found that a suitable temperature may be in the interval 14-16 °C. For example, a heat exchanger of the type the company Alfa Laval offers under the name "C3-SR" may be used for this, or any other suitable heat exchanger may be used.

A conventional slot filter 105 may be arranged downstream the heat exchanger 103 to remove undesired large pulp particles from the raw orange juice 102.

An ultrafilter 107 is arranged downstream the slot filter 105 to separate the raw orange juice 102 into an UF permeate 104 and an UF retentate 106. The ultrafilter 107 is a ceramic type filter having a membrane with a pore size of 19-21 nm, or a pore size of 20 nm. The channel size of the ultrafilter 107 may be 3,5-4,5 mm, or the channel size may be 4 mm. The main function of the ultrafilter 107 is to separate the inlet stream into two other streams; the UF retentate 106 and the UF permeate 104. To do this separation a pressure of 2,3-2,7 bar, or more specifically a pressure of 2,5 bar, is applied to the raw orange juice 102 and the product is fed through the ceramic membrane described above. The UF retentate 106 is retained at the membrane while the UF permeate 104 passes the membrane. The concentration factor of the ultrafilter 107 is in the range of 2,7 to 3,4. The concentration factor is determined as the starting volume divided by the end volume, i.e. the volume of raw juice 102 that enters the ultrafilter 107 divided by the volume of UF retentate 106 that leaves the ultrafilter 107.

The UF permeate 104 that exits the ultrafilter 107 enters a buffer tank 129. The buffer tank 129 may have a jacket though which ice water or some other cooling flows to provide for keeping the temperature of the UF permeate 104 in the interval 14-16 °C. The buffer tank 129 may also have an agitator to homogenize the UF permeate 104.

A nanofilter 130 is arranged downstream the buffer tank 129 to receive and separate the UF permeate 104 into a NF permeate 131 and a NF retentate 132. The nanofilter 130 is a spiral wound filter with a pore size resulting a molecular weight cut-off as 600-800 Dalton. The main function of the nanofilter 130 is to separate the inlet stream, i.e. the UF permeate 104, into two other streams; the NF retentate 132 and the NF permeate 131. The NF retentate 132 is retained by the filter 130 while the NF permeate 131 passes the filter 130. The concentration factor of the nanofilter 130 is in the range of 3,8 to 4,2. The concentration factor is determined as the starting volume divided by the end volume, i.e. the volume of UF permeate 104 that enters the nanofilter 130 divided by the volume of NF retentate 132 that leaves the nanofilter 130. A buffer tank 133 may be used for temporarily storing the NF permeate 131.

A mixing unit 109 is connected such that it receives the UF retentate 106 from the ultrafilter 107, and is connected such that it receives the NF permeate 131 from the nanofilter 130. The mixing unit 109 is further configured to mix the UF retentate 106 and the NF permeate 130 to produce the orange juice 108. The mixing unit 109 may be an aseptic storage tank, which may include a flow re-circulator and/or an agitator for efficiently accomplish the mixing. Mixing may be achieved in other ways, for example by using so called in-line mixing, where the UF retentate 106 and the NF permeate 130 are fed into the same fluid line, for example via a branch pipe. The mixture of the UF retentate 106 and the NF permeate 130 forms the orange juice 108.

A pasteurizer 113 receives the mixed orange juice 108 from the mixing unit 109 and pasteurizes the orange juice 108. The pasteurizer 113 may be a tubular heat exchanger. In the pasteurization, the orange juice 108 may be heated to a temperature of at least 95°C by indirect heat exchange. The orange juice 108 is kept at minimum 95 °C for at least 30 seconds to inactivate enzymes and kill deteriorating and pathogenic microorganisms.

The pasteurized orange juice 108 enters a storage tank 111. The storage tank 111 may be a buffer tank and it has a jacket though which ice water may flow to keep the orange juice 108 at a temperature lower than 14°C. The storage tank 111 may also have an agitator to homogenize the orange juice 108.

An aseptic filling machine 115 is connected to receive the orange juice 108 from the storage tank 111 and is arranged to aseptically fill packets 117 with the orange juice 108. The filling machine 115 may be any conventional machine built for aseptically filling packets with liquid food.

The raw orange juice 102, the UF permeate 104, the UF retentate 106, the NF permeate and the orange juice 108 are fed between the various components and units of the system 100 and desirable pressure levels are obtained by using conventional pumps (not shown) that are controlled by the control system 120. The NF retentate 132 may be used for other purposes or may discarded as waste. In an embodiment a part of the NF retentate 132 is introduced into the mixing unit 109, for example if a slightly higher sugar content (sweetness) is desired for the orange juice 108.

As will be described below, the system 100 is operated to produce orange juice 108 from raw orange juice 102. Various properties are then obtained for the raw orange juice 102, the UF retentate 106, the UF permeate 104, the NF retentate 132, the NF permeate 131 and the orange juice 108 after pasteurization. These values have been collected and measured as described in the following, typically by means of the sensors 127 as well as by means of sampling and subsequent laboratory analysis.

pH values are obtained by conventional pH meters. Essential oil values are obtained by using the Scott Method (Bromide-Bromate solution), also described in "Citrus Processing: A Complete Guide" by Dan A. Kimball. The essential oil is the combination of oils (hydrocarbons) present in oranges, which typically comprise of more than 90% D-limonene. Vitamin C values are obtained by conventional methods using sampling and subsequent laboratory titration analysis. Enzyme values are obtained by sampling and by following the procedure for PEU test described in "Citrus Processing: Quality Control and Technology" by Dan A. Kimball. Acidity (nitric acid) values are obtained by using sodium hydroxide titration method. Total lactic bacteria values, listeria monocytogenes values and total bacteria values are obtained by sampling and subsequent conventional laboratory methods. Brix values are obtained by conventional Brix meters. Fructose, glucose and sucrose values are obtained by conventional methods for determining the amount of such sugars in a liquid. Color and lightness values are obtained by colorimeter measurements, by using conventional equipment such as Konica Minolta type CM-2600d spectrophotometer.

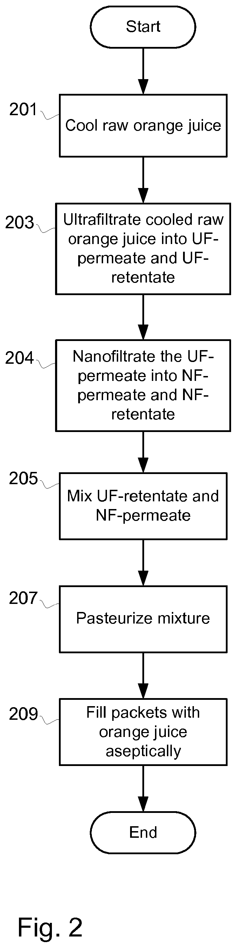

Turning now to Fig. 2 and with continued reference to Fig. 1, software instructions that are stored in the memory 124 may be executed by the processor 122 in the measuring and control system 120 in order to obtain measurable values and to provide control signals to the system 100, via the signal lines 121, and thereby perform a method for producing orange juice 108 that has the values and properties discussed herein.

Such a method comprises cooling 201 raw orange juice 102 and, as exemplified in Fig. 1, the raw orange juice 102 may originate in the storage tank 101 and be cooled in the heat exchanger 103 to a temperature that is suitable for the subsequent ultrafiltration and nanofiltration.

The cooled raw orange juice 102 is ultrafiltrated 203 in the ultrafilter 107 to produce a UF permeate 104 and a UF retentate 106. A suitable temperature at which the raw orange juice 102 is ultrafiltrated 203 is in the range of 14-16 °C. As indicated in Fig. 1, the cooled raw orange juice 102 may optionally have been subjected to filtering in the slot filter 105 before being ultrafiltrated in the ultrafilter 107.

The UF permeate 104 is nanofiltrated 204 in the nanofilter 130 to produce a NF permeate 131 a NF retentate 132. A suitable temperature at which the UF permeate 104 is nanofiltrated 204 is in the range of 14-16 °C. Before and after the nanofiltering the UF permeate 104 respectively the NF permeate 131 may be temporarily stored in buffer tanks.

The UF retentate 106 and the NF permeate 131 are mixed 205 in the mixing unit 109 to produce orange juice 108. The orange juice 108 has a sugar content in the interval 67% to 77% of the sugar content of the raw orange juice. The sugar content is defined as the Brix value.

After the mixing the orange juice 108 is pasteurized 207 in the pasteurizer 113. With regards to the pasteurization 207, the pasteurization temperature is 95 °C and the orange juice 108 is held at this temperature for at least 30 seconds.

Packets 117 are then aseptically filled 209 with the orange juice 108 that is obtained by the mixing 207.

In an embodiment, apart from the described ultrafiltration 203 and nanofiltration 204, none of the raw orange juice 102, the UF retentate 106, the UF permeate, the NF permeate and the mixed orange juice 108 has been subjected to any other microfiltration, ultrafiltration, nanofiltration or filtration by reverse osmosis. In other words, the only filtration that is used in the process, not counting coarser filtration than microfiltration such as the filtering in the slot filter 105, is one step of ultrafiltration and one step of nanofiltration.

In the method for producing orange juice 108, the ultrafiltered retentate 106 has a sugar content in the interval 99% to 105% of the sugar content of the raw orange juice 102, while the nanofiltered permeate 131 has a sugar content in the interval 62% to 68% of the sugar content of the ultrafiltered permeate 104.

The mixing 205 is done so that the ultrafiltered retentate 106 and the nanofiltered permeate 131 produce the orange juice 108 with a fructose content in the interval 84% to 90% of the fructose content of the raw orange juice 102. The ultrafiltered retentate 106 has a fructose content in the interval 0% to 2% of the fructose content of the raw orange juice 102, while the nanofiltered permeate 131 has a fructose content in the interval 69% to 75% of the fructose content of the ultrafiltered permeate 104.

The mixing 205 may also be done so that the ultrafiltered retentate 106 and the nanofiltered permeate 131 produce orange juice 108 that has a glucose content in the interval 84% to 90% of the glucose content of the raw orange juice 102. The ultrafiltered retentate 106 has a glucose content in the interval 0% to 2% of the glucose content of the raw orange juice 102, and the nanofiltered permeate 131 has a glucose content in the interval 77% to 83% of the glucose content of the ultrafiltered permeate 104.

The mixing 205 may also be done so that the ultrafiltered retentate 106 and the nanofiltered permeate 131 produce orange juice 108 that has a sucrose content in the interval 56% to 62% of the sucrose content of the raw orange juice 102. The ultrafiltered retentate 106 has a sucrose content in the interval 0% to 2% of the sucrose content of the raw orange juice 102, and the nanofiltered permeate 131 has a sucrose content in the interval 34% to 40% of the sucrose content of the ultrafiltered permeate 104.

The pasteurizing 207 of the orange juice 108 may comprise pasteurizing the orange juice 108 to obtain an enzyme pectin esterase, PEU, content that is less than 1,3 % of the PEU content of the raw orange juice 102.

In the method for producing orange juice 108 it has been found that, in the orange juice 108 produced by the mixing 207, the essential oil content is within the range of 18% to 28% of the essential oil content of the raw orange juice 102. Furthermore, in the UF retentate 106 the essential oil content is in the interval 165% to 185% of the essential oil content of the raw orange juice 102.

Detailed results from operation of the system 100 according to the method described above have resulted in parameter values as specified in tables 1a-d as follows:

**Table 1a:**

| | pH | essential oil % | vitamin C (ppm) | enzyme PEU |
|---|---|---|---|---|
| Raw orange juice 102 | 3,56 | 0,047 | 579,1245 | 2,92E-03 |
| UF retentate 106 | 3,56 | 0,084 | 572,7945 | 7,50E-03 |
| UF permeate 104 | 3,48 | 0,006 | 581,523 | 5,46E-05 |
| NF retentate 132 | 3,66 | 0,003 | 568,930 | 5,06E-05 |
| NF permeate 131 | 3,53 | 0,013 | 631,153 | 5,49E-05 |
| Orange juice 108 | 3,71 | 0,011 | 523,262 | 3,01E-05 |
| Orange juice 108 relative raw orange juice 102 | 104,36% | 23,40% | 90,35% | 1,03% |

**Table 1b:**

| | acidity g citric acid/100g | total lactic bacteria (CFU/ml) | listeria monocytogenes | total bacteria CFU/ml |
|---|---|---|---|---|
| Raw orange juice 102 | 0,78 | 1,70E+03 | Absent in 25ml | 5,60E+04 |
| UF retentate 106 | 0,79 | 3,80E+03 | Absent in 25ml | 7,20E+03 |
| UF permeate 104 | 0,74 | <1 | Absent in 25ml | <1 |
| NF retentate 132 | 0,67 | <1 | Absent in 25ml | 2,20E+03 |
| NF permeate 131 | 0,92 | 4,20E+03 | Absent in 25ml | 1,70E+04 |
| Orange juice 108 | 0,69 | <1 | Absent in 25ml | 3,80E+02 |
| Orange juice 108 relative raw orange juice 102 | 88,46% | - | - | 0,68% |

**Table 1c:**

| | brix | fructose (g/100g) | glucose (g/100g) | sucrose (g/100g) |
|---|---|---|---|---|
| Raw orange juice 102 | 12,40 | 2,61 | 2,77 | 5,02 |
| UF retentate 106 | 12,65 | - | - | - |
| UF permeate 104 | 12,10 | 2,95 | 2,99 | 5,49 |
| NF retentate 132 | 7,90 | 2,12 | 2,38 | 2,01 |
| NF permeate 131 | 18,90 | 3,5 | 3,58 | 9,66 |
| Orange juice 108 | 9,00 | 2,28 | 2,41 | 2,95 |
| Orange juice 108 relative raw orange juice 102 | 72,58% | 87,36% | 87,00% | 58,76% |

**Table 1d:**

| | a (color) green | b (color) red | L (lightness) | color h (hue angle) |
|---|---|---|---|---|
| Raw orange juice 102 | -1,92 | 9,54 | 37,68 | 101,36 |
| UF retentate 106 | -1,87 | 20,14 | 46,52 | 95,30 |
| UF permeate 104 | -3,09 | 5,38 | 51,12 | 119,85 |
| NF retentate 132 | -1,32 | 0,65 | 51,42 | 153,71 |
| NF permeate 131 | -4,30 | 10,75 | 49,93 | 111,80 |
| Orange juice 108 | -1,55 | 8,46 | 35,82 | 100,39 |
| Orange juice 108 relative raw orange juice 102 | 80,94% | 88,67% | 95,05% | 99,04% |

Complementary tests show similar results. Producing a juice in the way described above such that the discussed ranges are obtained, provides a juice that has a reduced sugar content while still providing a good taste and quality. At the same time, the shelf life of the juice 108 is long, more than 60 days when stored in a temperature of up to 5 °C, or even up to 8 °C.

## Claims

1. A method for producing orange juice (108) by only two filters, not counting coarser filtration than microfiltration, being one ultrafilter (107) and one nanofilter (103), comprising:
ultrafiltrating (203) the raw orange juice (102) by a ceramic type ultrafilter (107) having a membrane with a pore size of 19-21 nm and a channel size of 3,5-4,5 mm to produce an ultrafiltered permeate (104) and an ultrafiltered retentate (106),
nanofiltrating (204) the ultrafiltered permeate (104) by a spiral wound nanofilter (130) having a pore size resulting a molecular weight cut-off as 600-800 Dalton to produce a nanofiltered permeate (131) and a nanofiltered retentate (132),
mixing (205) the ultrafiltered retentate (106) and the nanofiltered permeate (131) to produce orange juice (108) having a sugar content in the interval 67% to 77% of the sugar content of the raw orange juice (102),
pasteurizing (207) the orange juice (108), and
aseptically filling (209) packets (117) with the orange juice (108) produced by the mixing.

2. The method of claim 1, wherein:
the ultrafiltered retentate (106) has a sugar content in the interval 99% to 105% of the sugar content of the raw orange juice (102), and
the nanofiltered permeate (131) has a sugar content in the interval 62% to 68% of the sugar content of the ultrafiltered permeate (104).

3. The method of claim 1 or claim 2, wherein:
the mixing (205) comprises mixing the ultrafiltered retentate (106) and the nanofiltered permeate (131) to produce orange juice (108) having a fructose content in the interval 84% to 90% of the fructose content of the raw orange juice (102).

4. The method of any of claim 1 to 3, wherein:
the ultrafiltered retentate (106) has a fructose content in the interval 0% to 2% of the fructose content of the raw orange juice (102), and
the nanofiltered permeate (131) has a fructose content in the interval 69% to 75% of the fructose content of the ultrafiltered permeate (104).

5. The method of any of claims 1 to 4, wherein:
the mixing (205) comprises mixing the ultrafiltered retentate (106) and the nanofiltered permeate (131) to produce orange juice (108) having a glucose content in the interval 84% to 90% of the glucose content of the raw orange juice (102).

6. The method of any of claim 1 to 5, wherein:
the ultrafiltered retentate (106) has a glucose content in the interval 0% to 2% of the glucose content of the raw orange juice (102), and
the nanofiltered permeate (131) has a glucose content in the interval 77% to 83% of the glucose content of the ultrafiltered permeate (104).

7. The method of any of claims 1 to 6, wherein:
the mixing (205) comprises mixing the ultrafiltered retentate (106) and the nanofiltered permeate (131) to produce orange juice (108) having a sucrose content in the interval 56% to 62% of the sucrose content of the raw orange juice (102).

8. The method of any of claim 1 to 7, wherein:
the ultrafiltered retentate (106) has a sucrose content in the interval 0% to 2% of the sucrose content of the raw orange juice (102), and
the nanofiltered permeate (131) has a sucrose content in the interval 34% to 40% of the sucrose content of the ultrafiltered permeate (104).

9. The method of any of claims 1 to 8, wherein:
the pasteurizing (207) of the orange juice (108) comprises pasteurizing the orange juice (108) to obtain an enzyme pectin esterase, PEU, content that is less than 1,3 % of the PEU content of the raw orange juice (102).

10. The method of any of claims 1 to 9, wherein:
the ultrafiltrating (203) and the nanofiltrating (204) are performed at a temperature in the range of 14-16 °C.

11. The method of any of claims 1 to 9, wherein:
the ultrafiltrating (203) is performed with a concentration factor in the range of 2,7 to 3,4, and the nanofiltrating (204) is performed with a concentration factor in the range of 3,8 to 4,2.

12. A system (100) for producing orange juice (108) by only two filters that are not coarser filtration than microfiltration, are one ultrafilter (107) and one nanofilter (103), comprising:
a ceramic type ultrafilter (107) having a membrane with a pore size of 19-21 nm and a channel size of 3,5-4,5 mm arranged to ultrafilter the raw orange juice (102) to produce an ultrafiltered permeate (104) and an ultrafiltered retentate (106),
a spiral wound nanofilter (130) having a pore size resulting a molecular weight cut-off as 600-800 Dalton arranged to nanofilter the ultrafiltered permeate (104) to produce a nanofiltered permeate (131) and a nanofiltered retentate (132),
a mixing unit (109) arranged to mix the ultrafiltered retentate (106) and the nanofiltered permeate (131) to produce orange juice (108) having a sugar content in the interval 67% to 77% of the sugar content of the raw orange juice (102),
a pasteurizer (113) arranged to pasteurize the orange juice (108), and
an aseptic filling machine (115) arranged to aseptically fill packets (117) with the pasteurized orange juice (108).

## Patentansprüche

1. Verfahren zur Herstellung von Orangensaft (108) mittels nur zwei Filtern, wobei gröbere Filtration als Mikrofiltration nicht gezählt wird, die ein Ultrafilter (107) und ein Nanofilter (103) sind, umfassend:
Ultrafiltrieren (203) des rohen Orangensafts (102) mit einem Ultrafilter vom Keramiktyp (107), der eine Membran mit einer Porengröße von 19 bis 21 nm und eine Kanalgröße von 3,5 bis 4,5 mm aufweist, um ein ultrafiltriertes Permeat (104) und ein ultrafiltriertes Retentat (106) herzustellen,
Nanofiltrieren (204) des ultrafiltrierten Permeats (104) mit einem spiralig gewundenen Nanofilter (130), der eine Porengröße aufweist, die zu einer Molekulargewichtausschlussgrenze von 600 bis 800 Dalton führt, um ein nanofiltriertes Permeat (131) und ein nanofiltriertes Retentat (132) herzustellen,
Mischen (205) des ultrafiltrierten Retentats (106) und des nanofiltrierten Permeats (131), um Orangensaft (108) mit einem Zuckergehalt im Intervall von 67 % bis 77 % des Zuckergehalts des rohen Orangensafts (102) herzustellen,
Pasteurisieren (207) des Orangensafts (108), und
aseptisches Abfüllen (209) von Paketen (117) mit dem Orangensaft (108), der durch das Mischen hergestellt wurde.

2. Verfahren nach Anspruch 1, wobei:
das ultrafiltrierte Retentat (106) einen Zuckergehalt im Intervall von 99 % bis 105 % des Zuckergehalts des rohen Orangensafts (102) hat, und
das nanofiltrierte Permeat (131) einen Zuckergehalt im Intervall von 62 % bis 68 % des Zuckergehalts des ultrafiltrierten Permeats (104) hat.

3. Verfahren nach Anspruch 1 oder Anspruch 2, wobei: das Mischen (205) Mischen des ultrafiltrierten Retentats (106) und des nanofiltrierten Permeats (131) umfasst, um Orangensaft (108) mit einem Fructosegehalt im Intervall von 84 % bis 90 % des Fructosegehalts des rohen Orangensafts (102) herzustellen

4. Verfahren nach einem der Ansprüche 1 bis 3, wobei: das ultrafiltrierte Retentat (106) einen Fructosegehalt im Intervall von 0 % bis 2 % des Fructosegehalts des rohen Orangensafts (102) hat, und
das nanofiltrierte Permeat (131) einen Fructosegehalt im Intervall von 69 % bis 75 % des Fructosegehalts des ultrafiltrierten Permeats (104) hat.

5. Verfahren nach einem der Ansprüche 1 bis 4, wobei:
das Mischen (205) Mischen des ultrafiltrierten Retentats (106) und des nanofiltrierten Permeats (131) umfasst, um Orangensaft (108) mit einem Glucosegehalt im Intervall von 84 % bis 90 % des Glucosegehalts des rohen Orangensafts (102) herzustellen

6. Verfahren nach einem der Ansprüche 1 bis 5, wobei: das ultrafiltrierte Retentat (106) einen Glucosegehalt im Intervall von 0 % bis 2 % des Glucosegehalts des rohen Orangensafts (102) hat, und
das nanofiltrierte Permeat (131) einen Glucosegehalt im Intervall von 77 % bis 83 % des Glucosegehalts des ultrafiltrierten Permeats (104) hat.

7. Verfahren nach einem der Ansprüche 1 bis 6, wobei:
das Mischen (205) Mischen des ultrafiltrierten Retentats (106) und des nanofiltrierten Permeats (131) umfasst, um Orangensaft (108) mit einem Saccharosegehalt im Intervall von 56 % bis 62 % des Saccharosegehalts des rohen Orangensafts (102) herzustellen.

8. Verfahren nach einem der Ansprüche 1 bis 7, wobei: das ultrafiltrierte Retentat (106) einen Saccharosegehalt im Intervall von 0 % bis 2 % des Saccharosegehalts des rohen Orangensafts (102) hat, und
das nanofiltrierte Permeat (131) einen Saccharosegehalt im Intervall von 34 % bis 40 % des Saccharosegehalts des ultrafiltrierten Permeats (104) hat.

9. Verfahren nach einem der Ansprüche 1 bis 8, wobei: das Pasteurisieren (207) des Orangensafts (108) Pasteurisieren des Orangensafts (108) umfasst, um einen Gehalt an Enzym Pektinesterase, PEU, zu erhalten, der weniger als 1,3 % des PEU-Gehalts des rohen Orangensafts (102) beträgt.

10. Verfahren nach einem der Ansprüche 1 bis 9, wobei: das Ultrafiltrieren (203) und das Nanofiltrieren (204) bei einer Temperatur im Bereich von 14 bis 16 °C durchgeführt werden.

11. Verfahren nach einem der Ansprüche 1 bis 9, wobei: das Ultrafiltrieren (203) mit einem Konzentrationsfaktor im Bereich von 2,7 bis 3,4 durchgeführt wird, und das Nanofiltrieren (204) mit einem Konzentrationsfaktor im Bereich von 3,8 bis 4,2 durchgeführt wird.

12. System (100) zur Herstellung von Orangensaft (108) mittels nur zwei Filtern, die nicht gröbere Filtration als Mikrofiltration sind, die ein Ultrafilter (107) und ein Nanofilter (103) sind, umfassend:
einen Ultrafilter vom Keramiktyp (107), der eine Membran mit einer Porengröße von 19 bis 21 nm und eine Kanalgröße von 3,5 bis 4,5 mm aufweist, und zum Ultrafiltrieren des rohen Orangensafts (102) angeordnet ist, um ein ultrafiltriertes Permeat (104) und ein ultrafiltriertes Retentat (106) herzustellen,
einen spiralig gewundenen Nanofilter (130) mit einer Porengröße, die zu einer Molekulargewichtausschlussgrenze von 600 bis 800 Dalton führt, und zum Nanofiltrieren des ultrafiltrierten Permeats (104) angeordnet ist, um ein nanofiltriertes Permeat (131) und ein nanofiltriertes Retentat (132) herzustellen,
eine Mischeinheit (109), die zum Mischen des ultrafiltrierten Retentats (106) und des nanofiltrierten Permeats (131) angeordnet ist, um Orangensaft (108) mit einem Zuckergehalt im Intervall von 67 % bis 77 % des Zuckergehalts des rohen Orangensafts (102) herzustellen,
einen Pasteurisierer (113), der zum Pasteurisieren des Orangensafts (108) angeordnet ist, und
eine aseptische Füllmaschine (115), die zum aseptischen Füllen von Paketen (117) mit dem pasteurisierten Orangensaft (108) angeordnet ist.

## Revendications

1. Procédé de production de jus d'orange (108) par seulement deux filtres, sans compter une filtration plus grossière que la microfiltration, soit un ultrafiltre (107) et un nanofiltre (103), comprenant :
l'ultrafiltration (203) du jus d'orange brut (102) par un ultrafiltre de type céramique (107) ayant une membrane de taille de pores de 19-21 nm et une taille de canal de 3,5-4,5 mm, afin de produire un perméat ultrafiltré (104) et un rétentat ultrafiltré (106),
la nanofiltration (204) du perméat ultrafiltré (104) par un nanofiltre en spirale (130) ayant une taille de pores conduisant à un seuil de coupure de poids moléculaire de 600-800 daltons, afin de produire un perméat nanofiltré (131) et un rétentat nanofiltré (132),
le mélange (205) du rétentat ultrafiltré (106) et du perméat nanofiltré (131) afin de produire du jus d'orange (108) présentant une teneur en sucre dans l'intervalle allant de 67% à 77% de la teneur en sucre du jus d'orange brut (102),
la pasteurisation (207) du jus d'orange (108), et
le remplissage, de manière aseptique, (209) de sachets (117) avec le jus d'orange (108) produit par le mélange.

2. Procédé selon la revendication 1, dans lequel :
le rétentat ultrafiltré (106) présente une teneur en sucre dans l'intervalle allant de 99% à 105% de la teneur en sucre du jus d'orange brut (102), et
le perméat nanofiltré (131) présente une teneur en sucre dans l'intervalle allant de 62% à 68% de la teneur en sucre du perméat ultrafiltré (104).

3. Procédé selon la revendication 1 ou la revendication 2, dans lequel :
le mélange (205) comprend le mélange du rétentat ultrafiltré (106) et du perméat nanofiltré (131) afin de produire du jus d'orange (108) présentant une teneur en fructose dans l'intervalle allant de 84% à 90% de la teneur en fructose du jus d'orange brut (102).

4. Procédé selon l'une quelconque des revendications 1 à 3, dans lequel :
le rétentat ultrafiltré (106) présente une teneur en fructose dans l'intervalle allant de 0% à 2% de la teneur en fructose du jus d'orange brut (102), et
le perméat nanofiltré (131) présente une teneur en fructose dans l'intervalle allant de 69% à 75% de la teneur en fructose du perméat ultrafiltré (104).

5. Procédé selon l'une quelconque des revendications 1 à 4, dans lequel :
le mélange (205) comprend le mélange du rétentat ultrafiltré (106) et du perméat nanofiltré (131) afin de produire du jus d'orange (108) présentant une teneur en glucose dans l'intervalle allant de 84% à 90% de la teneur en glucose du jus d'orange brut (102).

6. Procédé selon l'une quelconque des revendications 1 à 5, dans lequel :
le rétentat ultrafiltré (106) présente une teneur en glucose dans l'intervalle allant de 0% à 2% de la teneur en glucose du jus d'orange brut (102), et
le perméat nanofiltré (131) présente une teneur en glucose dans l'intervalle allant de 77% à 83% de la teneur en glucose du perméat ultrafiltré (104).

7. Procédé selon l'une quelconque des revendications 1 à 6, dans lequel :
le mélange (205) comprend le mélange du rétentat ultrafiltré (106) et du perméat nanofiltré (131) afin de produire du jus d'orange (108) présentant une teneur en saccharose dans l'intervalle allant de 56% à 62% de la teneur en saccharose du jus d'orange brut (102).

8. Procédé selon l'une quelconque des revendications 1 à 7, dans lequel :
le rétentat ultrafiltré (106) présente une teneur en saccharose dans l'intervalle allant de 0% à 2% de la teneur en saccharose du jus d'orange brut (102), et
le perméat nanofiltré (131) présente une teneur en saccharose dans l'intervalle allant de 34% à 40% de la teneur en saccharose du perméat ultrafiltré (104).

9. Procédé selon l'une quelconque des revendications 1 à 8, dans lequel :
la pasteurisation (207) du jus d'orange (108) comprend la pasteurisation du jus d'orange (108) afin d'obtenir une teneur en enzyme pectine estérase, PEU, qui est inférieure à 1,3% de la teneur en PEU du jus d'orange brut (102).

10. Procédé selon l'une quelconque des revendications 1 à 9, dans lequel :
l'ultrafiltration (203) et la nanofiltration (204) sont effectuées à une température dans une plage de 14-16°C.

11. Procédé selon l'une quelconque des revendications 1 à 9, dans lequel :
l'ultrafiltration (203) est effectuée avec un facteur de concentration dans la plage allant de 2,7 à 3,4, et la nanofiltration (204) est effectuée avec un facteur de concentration dans la plage de 3,8 à 4,2.

12. Système (100) de production de jus d'orange (108) par seulement deux filtres sans filtration plus grossière que la microfiltration, soit un ultrafiltre (107) et un nanofiltre (103),comprenant :
un ultrafiltre de type céramique (107) ayant une membrane de taille de pores de 19-21 nm et une taille de canal de 3,5-4,5 mm, conçu pour ultrafiltrer le jus d'orange brut (102) afin de produire un perméat ultrafiltré (104) et un rétentat ultrafiltré (106),
un nanofiltre en spirale (130) ayant une taille de pores conduisant à un seuil de coupure de poids moléculaire de 600-800 daltons, conçu pour nanofiltrer le perméat ultrafiltré (104) afin de produire un perméat nanofiltré (131) et un rétentat nanofiltré (132),
une unité de mélange (109) conçue pour mélanger le rétentat ultrafiltré (106) et le perméat nanofiltré (131) afin de produire du jus d'orange (108) présentant une teneur en sucre dans l'intervalle allant de 67% à 77% de la teneur en sucre du jus d'orange brut (102),
un pasteurisateur (113) conçu pour pasteuriser le jus d'orange (108), et
une machine de remplissage aseptique (115) conçue pour remplir, de manière aseptique, des sachets (117) avec le jus d'orange pasteurisé (108).
